# EUROPEAN PATENT APPLICATION

(11) **EP 2 437 570 A1**
(43) Date of publication of application: **04.04.2012**
(21) Application number: 10793533.0
(22) Date of filing: 10.05.2010
(51) Int. Cl.: H04W 88/00

(54) **METHOD FOR MANAGING APPLICATION INFORMATION IMPLEMENTED BY A MOBILE PHONE AND APPLICATION MANAGER**

(30) Priority: 01.07.2009 CN 200910146760
(71) Applicant: ZTE Corporation, Shenzhen, Guangdong 518057 (CN)
(72) Inventor: GOU, Dingyong, Shenzhen Guangdong 518057 (CN); LIU, Gang, Shenzhen Guangdong 518057 (CN); HE, Ping, Shenzhen Guangdong 518057 (CN); XIE, Xin, Shenzhen Guangdong 518057 (CN)
(74) Representative: Zhao, Jie
(86) International application number: PCT/CN2010/072564
(87) International publication number: WO 2011/000238

(57) **Abstract**

The present invention discloses a method for implementing management of application information in a mobile phone and an application manager, wherein, the method includes: after the mobile phone is powered on, its application manager reading application information from a file system and caching the application information in background. In the present invention, when the user starts up the application manager, the cached application information can be directly read and displayed, and does not need to be loaded from the file system, thus greatly improving the speed of displaying the application information, and thereby greatly enhancing the user's experience. In addition, when the user updates the application and inserts a memory card into the mobile phone, the information is synchronously updated in background by the application manager to be provided to the user for obtaining and displaying at any time.

## Description

### Technical Field

The present invention relates to a wireless communication terminal, and in particular, to a method for implementing management of application information in a mobile phone and an application manager in the mobile phone.

### Background Art

In the development of mobile phone applications, there are a large number of application softwares for games and various services developed by Java language, and these softwares can be installed to a mobile phone if desired by the user. For an intelligent mobile phone using an Open Operation System (OOS), the user may also install a local application written using languages like C/C++. Generally, the mobile phone has a software specially used to manage these installed applications, which is called as an AMS (Application Management System or Application Management Software). For an AMS only for managing Java applications, the AMS is called as a Java AMS. More generally, the application manager in the mobile phone can manage not only Java applications, but also non-Java applications, and can display on the mobile phone interface the application icons and application information list of the applications that have been installed in the mobile phone. The user can perform various operations including "install", "run", "delete", "upgrade", "view properties", and "set security options" for the applications through the interface of the application manager.

Due to the development of the current memory technology, it is quite common that a mobile phone supports a memory space of several GBs, The memory space actually supported by a mobile phone will have no limitation at all by replacing the memory card. With increase of the memory space of the mobile phone, the applications and media resource files such as MP3 and video that can be installed in the mobile phone by the user may reach thousands. Such, it needs to take much time for the application manager to read the application information, including names, properties, personalized icons and the like of the applications, from the file system and display it With the increase of the number of applications installed in the mobile phone by the user, the time spent on reading the application information becomes longer and longer. For example, it will take dozens of seconds for a music player to read hundreds of MP3 files on a 2G memory card and form a playing list.

The application manager is the portal of application management, and its speed for loading, displaying and operating the application information will greatly influence the user's experience. Therefore, it is necessary to improve the application manager to enhance the user's experience.

### Summary of the Invention

The technical problem to be solved in the present invention is to provide a method for implementing management of application information in a mobile phone and an application manager, which can accelerate reading and displaying of application information.

In order to solve the above technical problem, the present invention provides a method for implementing management of application information in a mobile phone, comprising:
after the mobile phone is powered on, an application manager of the mobile phone reading application information from a file system and caching the application information in background.

Preferably, when a user of the mobile phone requests for displaying the application information through a user interface of the application manager, the application manager displays the cached application information to the user.

Preferably, when the user of the mobile phone performs an application updating operation through the user interface, the application manager reads information of the application again from the file system and caches the information in background, and performs display refreshing when the user requests for displaying the application information through the user interface.

Preferably, the application updating operation comprises one or more of the following operations: adding a new application, deleting an existing application and modifying to cover an existing application.

Preferably, when the user of the mobile phone inserts a memory card into the mobile phone, the application manager detects the inserted memory card, reads corresponding information of an application and/or corresponding information of a media resource file on the memory card and caches the information in background, and performing display refreshing when the user requests for displaying the application information through the user interface.

In order to solve the above technical problem, the present invention provides an application manager device in a mobile phone, comprising a file system and a background serving module that are interconnected with each other, wherein:
the file system is configured to store applications installed in the mobile phone and application information;
the background serving module is configured to read the application information from the file system when the mobile phone is powered on and cache the application information.

Preferably, the device further comprises an application management user interface connected with the background serving module, wherein:
the application management user interface is configured to send an information inquiry request to the background serving module when a user of the mobile phone requests for displaying the application information, and display the application information returned by the background serving module to the user;
the background serving module is further configured to return the cached application information to the application management user interface when receiving the information inquiry request.

Preferably, the device further comprises an update operating module connected with the application management user interface and the file system respectively, wherein:
the update operating module is configured to, when the user of the mobile phone performs an application updating operation through the application management user interface, refresh an application and application information stored in the file system according to the updating operation, and meanwhile send a synchronous update notification to the background serving module;
the background serving module is further configured to, after receiving the synchronous update notification, read the application information from the file system in background again and cache the application information, and return the cached updated application information to the application management user interface for display refreshing when the user sends an information inquiry request through the application management user interface.

Preferably, the application updating operation comprises one or more of the following operations: adding a new application, deleting an existing application and modifying to cover an existing application.

Preferably, the update operating module is further configured to send an synchronous update notification to the background serving module when the user of the mobile phone inserts a memory card into the mobile phone through the application management user interface;
the background serving module is further configured to, after receiving the synchronous update notification, read corresponding information of an application and/or corresponding information of a media resource file on the memory card in background and caches the information, and return the cached corresponding information of the application and/or corresponding information of the media resource file to the application management user interface for display refreshing when the user sends an information inquiry request through the application management user interface.

In the present invention, the application information is read and cached by an application manager in background when the mobile phone is idle, and when the application manager is started up by the user, the cached application information is directly read and displayed without the need of loading from the file system, thus greatly improving the speed of displaying the information and thereby significantly enhancing the user's experience. Moreover, when the user of the mobile phone performs operations such as adding, deleting an application and inserting a memory card into the mobile phone, the application manager performs synchronous updating operation for the corresponding information in background so that the cached application information can keep consistent with the actual application information in the file system, and the user can obtain the latest application information display through the user interface of the application manger at any moment.

### Brief Description of Drawings

FIG. 1 illustrates the structure of the application manger provided in an example of the present invention;
FIG. 2 is a flowchart of the method for implementing management of application information provided in an example of the present invention.

### Preferred Embodiments of the Invention

The inventive concept of the method for implementing management of application information in a mobile phone and the application manager according to the present invention is to provide a buffering time for background operations based on the fact where most of users do not use the application manger immediately after the mobile phone is powered on. The application information is read from the file system by background when the mobile phone is idle and is cached in a memory; when the mobile phone enters a user interface of the application manager, the cached content is read from the memory and displayed, without the need of loading from the file system, thus greatly improving the speed of displaying the application information. When the operations such as adding a new application and deleting an existing application through the user interface have been completed, the background is notified to synchronously update the application information on this basis so that the information cached in the memory can keep consistent with the actual information in the file system, and the user interface of the application manager can obtain the latest application information through the background at any moment.

The technical scheme of the present invention will be described in detail below with reference to the drawings and preferred examples. The examples listed below are only used to describe and explain the present invention, rather than to limit the technical scheme of the present invention.

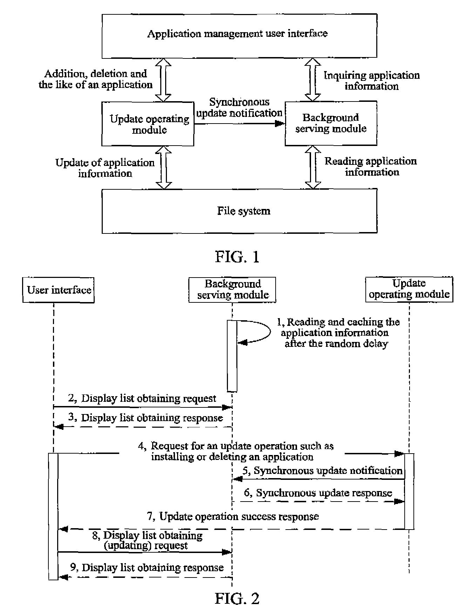

As shown in FIG. 1, it shows the structure of the application manger in an example of the present invention. The application manager comprises a file system, a background serving module, an application management user interface, and an update operating module that connected in sequence, wherein:
the file system is configured to store applications installed in the mobile phone and the information thereof;
the background serving module, further connected with the update operating module, is configured to start up after the mobile phone is powered on, read application information from the file system when the mobile phone is idle and cache it in a memory (not shown in the figures) of the mobile phone, and read the cached application information from the memory and return it to the application management user interface after receiving an information inquiry request sent by the application management user interface; after receiving a synchronous update notification from the update operating module, read the updated application information in the file system and cache it in the memory;
the application management user interface is configured to provide person-machine interaction between the user of the mobile phone and the mobile phone, send an information inquiry request to the background serving module when the user of the mobile phone wants to view the application information, and display the application information returned by the background serving module; send a corresponding update operating request to the update operating module when the user of the mobile phone wants to perform operations such as adding, deleting and modifying to cover, as well as inserting a memory card into the mobile phone;
the update operating module, further connected with the file system, is configured to, after receiving the update operating request sent by the application management user interface, perform the updating operations such as adding, deleting an application and the information thereof as well as inserting the memory card into the mobile phone and so on in the file system according to the request, and then send a synchronous update notification to the background serving module.

As shown in FIG. 2, it is a flowchart of the method for implementing management of application information provided in an example of the present invention, which relates to the application management user interface (referred to as user interface in short), the background serving module and the update operating module in the application manager, and comprises the following steps:
Step 1: the background serving module reading the application information after a boot random delay and caching the information;
Step 2: the user of the mobile phone sending a display list (i.e., application information) obtaining request to the background serving module through the user interface;
Step 3: the background serving module returning a display list obtaining response to the user interface, wherein the response contains the requested display list;
Step 4: the user of the mobile phone sending an update operating request such as installing, deleting an application to the update operating module through the user interface;
Step 5: after completing the corresponding update operation such as installing, deleting an application, the update operating module sending a synchronous update notification to the background serving module;
Step 6: after completing the corresponding update of application information, the background serving module returning a synchronous update response to the update operating module;
Step 7: the update operating module returning a corresponding update operation success response to the user interface;
Step 8: the user of the mobile phone sending an updated display list obtaining request to the background serving module through the user interface;
Step 9: the background serving module returning a display list obtaining response to the user interface, wherein the response contains the updated display list.

Or, the user of the mobile phone inserts a memory card in step 4, and the background serving module detects insertion of the memory card in step 5; the background serving module reads the corresponding information of the application or media resource files such as MP3 and video on the memory card and caches the information in step 6; the user of the mobile phone sends a request for obtaining the corresponding information on the memory card to the background serving module through the user interface in step 7, and displays the corresponding information returned by the background serving module in step 8.

The method in the above example of the present invention is based on an important fact, i.e., the user does not use the application manager immediately after powering on the mobile phone in most cases, which provides time for the background buffering. The above method of the present invention will be further described by taking various scenes in a mobile phone product as examples.

### Scene 1: the user enters an operation of the application manager in a time after the mobile phone is powered on

When the mobile phone is powered on, the application manger starts up initiatively in background, selects a period of random delay time and waits for CPU idleness;
when the delay time is up, the application manager reads the application information in the file system in background and caches the information, and then enters an idle state;
the user opens the user interface of the application manger and requests for the application information;
the application manger reads the cached application information, and displays it to the user through the user interface.

Since the information is read from the cached information but is not loaded from the file system, this operation can be completed in no time, and the information can be displayed immediately.

### Scene 2: updating the state when an application is added or deleted

After the mobile phone is powered on, the application manger starts up initiatively in background, selects a period of random delay time and waits for CPU idleness;
when the delay time is up, the application manager reads the application information in the file system in background and caches the information, and then enters an idle state;
the user opens the user interface of the application manger and obtains the application information cached by the application manager and displays it;
the user implementing operations such as installing (i.e., adding), deleting an application in the user interface, and the application manager performs corresponding synchronous update of the cached information in background and then enters an idle state;
the user reads the corresponding cached information through the user interface and performs display refreshing.

### Scene 3: the application manager detects insertion of a memory card

After the mobile phone is powered on, the application manger starts up initiatively in background, selects a period of random delay time and waits for CPU idleness;
when the delay time is up, the application manager reads the application information in the file system in background and caches the information, and then enters an idle state;
the users inserts a memory card;
the application manager detects insertion of the memory card in background, reads the corresponding information of the application or media resource file such as MP3 and video on the memory card and caches the information, and then enters an idle state;
the user opens the user interface of the application manager, reads the cached information corresponding to the file of the memory and displays it.

The technical scheme of the present invention is described by taking an application manager of Java language as an example, but the application manager provided by the present invention is not limited to Java language. The above typical scenes are only specific examples for explaining the technical scheme of the present invention, rather than for limiting the technical scheme of the present invention. The present invention is also not only applicable to the application manager, and for a person having ordinary skill in the art, the present invention may have various modifications and changes, for example, a multimedia player can load media file information in background using the method of the present invention, and display the information in real time when necessary. The protection scope of the present invention shall be defined by the claims.

### Industrial Applicability

The present invention provides a method for implementing management of application information in a mobile phone and an application manager, wherein, the application information is read and cached by an application manager in background when the mobile phone is idle, and when the application manager is started up by the user, the cached application information is directly read and displayed without the need of loading from the file system, thus greatly improving the speed of displaying the information and thereby significantly enhancing the user's experience. Moreover, when the user of the mobile phone performs operations such as adding, deleting an application and inserting a memory card into the mobile phone, the application manager performs synchronous updating operation for the corresponding information in background so that the cached application information can keep consistent with the actual application information in the file system, and the user can obtain the latest application information display through the user interface of the application manger at any moment.

## Claims

1. A method for implementing management of application information in a mobile phone, comprising:
after the mobile phone is powered on, an application manager of the mobile phone reading application information from a file system and caching the application information in background.

2. The method according to claim 1, further comprising:
when a user of the mobile phone requests for displaying the application information through a user interface of the application manager, the application manager displaying the cached application information to the user.

3. The method according to claim 1 or 2, further comprising:
when the user of the mobile phone performs an application updating operation through the user interface, the application manager reading information of the application again from the file system and caching the information in background, and performing display refreshing when the user requests for displaying the application information through the user interface.

4. The method according to claim 3, wherein,
the application updating operation comprises one or more of following operations: adding a new application, deleting an existing application and modifying to cover an existing application.

5. The method according to claim 1 or 2, further comprising:
when the user of the mobile phone inserts a memory card into the mobile phone, the application manager detecting the inserted memory card, reading corresponding information of an application and/or corresponding information of a media resource file on the memory card and caching the information in background, and performing display refreshing when the user requests for displaying the application information through the user interface.

6. An application manager device for use in a mobile phone, comprising a file system and a background serving module that are interconnected with each other, wherein:
the file system is configured to store applications installed in the mobile phone and application information;
the background serving module is configured to read the application information from the file system when the mobile phone is powered on and cache the application information.

7. The device according to claim 6, further comprising an application management user interface connected with the background serving module, wherein:
the application management user interface is configured to send an information inquiry request to the background serving module when a user of the mobile phone requests for displaying the application information, and display the application information returned by the background serving module to the user;
the background serving module is further configured to return the cached application information to the application management user interface when receiving the information inquiry request.

8. The device according to claim 7, further comprising an update operating module connected with the application management user interface and the file system respectively, wherein:
the update operating module is configured to, when the user of the mobile phone performs an application updating operation through the application management user interface, refresh an application and application information stored in the file system according to the updating operation, and meanwhile send a synchronous update notification to the background serving module;
the background serving module is further configured to, after receiving the synchronous update notification, read the application information from the file system again and cache the application information in background, and return the cached updated application information to the application management user interface for display refreshing when the user sends the information inquiry request through the application management user interface.

9. The device according to claim 8, wherein,
the application updating operation comprises one or more of following operations: adding a new application, deleting an existing application and modifying to cover an existing application.

10. The device according to claim 8, wherein,
the update operating module is further configured to send a synchronous update notification to the background serving module when the user of the mobile phone inserts a memory card into the mobile phone through the application management user interface;
the background serving module is further configured to, after receiving the synchronous update notification, read corresponding information of an application and/or corresponding information of a media resource file on the memory card and caches the information in background, and return the cached corresponding information of the application and/or corresponding information of the media resource file to the application management user interface for display refreshing when the user sends an information inquiry request through the application management user interface.
